# FASCICULE DE BREVET EUROPEEN

(11) **EP 2 138 216 B1**
(45) Date de publication et mention de la délivrance du brevet: **08.02.2012**
(21) Numéro de dépôt: 09290425.9
(22) Date de dépôt: 10.06.2009
(51) Int. Cl.: B01D 15/18, G01N 30/60, B01J 8/04

(54) **Nouveau système de distribution et de collecte des fluides dans une colonne multiétagée comportant un brise jet**
Vorrichtung mit einem Prallblech zur Verteilung eines Fluides in einer mehrstufigen Kolonne
Fluid distribution and mixing device comprising a splash plate in a multistep column

(30) Priorité: 27.06.2008 FR 0803692
(43) Date de publication de la demande: 30.12.2009
(73) Titulaire: IFP Energies nouvelles, 92852 Rueil-Malmaison Cedex (FR)
(72) Inventeur: Augier, Frederic, 69360 Saint Symphorien d Ozon (FR); Darmancier, Denis, 38200 Vienne (FR)

(56) Documents cités:
- WO-A-2006/055222
- FR-A- 2 740 054
- US-A- 4 378 292
- US-A- 5 846 411
- US-B1- 6 471 861

## Description

L'invention concerne un nouveau dispositif de distribution et de collecte de fluides au sein d'une colonne multiétagée mettant en oeuvre un écoulement desdits fluides dans un milieu de particules solides, appelé milieu granulaire.

On appelle colonne multi étagée une colonne constituée d'une multiplicité de plateaux disposés selon un axe sensiblement vertical, chaque plateau (dit plateau support) supportant un lit de solide granulaire, et les différents lits successifs étant traversés en série par le ou les fluides mis en oeuvre dans la colonne. Le fluide traversant les lits successifs est appelé fluide principal pour le distinguer d'autres fluides secondaires qui peuvent être ajoutés au fluide principal par l'intermédiaire d'un dispositif de distribution généralement situé entre deux lits successifs.

La présente invention ne porte pas sur le système permettant d'injecter des fluides secondaires et de mélanger ces fluides secondaires avec le fluide principal, mais uniquement sur le distributeur qui a pour but de répartir le fluide résultant du mélange du fluide principal et des fluides secondaires sur le lit granulaire situé immédiatement en aval. On parlera simplement dans la suite du texte de lit "aval" pour désigner le lit granulaire situé immédiatement en aval du distributeur selon la présente invention.

La présente invention concerne donc le dispositif de distribution qui permet d'alimenter chaque lit granulaire, ou au moins une partie d'entre eux, à partir d'un fluide qui se présente sous la forme d'un jet issu du système de mélange du fluide principal et des fluides secondaires équipant le lit granulaire précédent, c'est à dire plus précisément le lit "amont", au sens de l'écoulement du fluide principal.

Dans la suite du texte, on parle de dispositif de distribution à résistance variable (en abrégé dispositif DRV) pour rappeler le principe du distributeur selon la présente invention. L'invention porte plus particulièrement sur la configuration de ce distributeur.

Chaque plateau de la colonne possède plusieurs distributeurs DRV en liaison avec la manière dont le plateau est divisé en plusieurs secteurs.

Généralement, chaque secteur du plateau comporte un distributeur DRV.

L'invention consiste essentiellement en ce que le distributeur associé à chaque secteur d'un plateau de rang P comprend dans le sens de l'écoulement principal:
- un brise jet plein situé au dessous de la sortie du baffle de collecte, à une distance de ce dernier comprise 7 et 25 mm.
- une plaque perforée intermédiaire s'étendant en largeur au delà du brise jet,
- une plaque de distribution s'étendant sur toute la surface du panneau considéré,

L'invention permet d'approcher un écoulement de type piston à l'intérieur du lit de particules aval, et donc d'optimiser les performances de différents procédés mis en oeuvre dans des colonnes multiétagées, comme par exemple l'adsorption en lit mobile simulé.

L'invention permet également de réduire le phénomène de formation de sillons au droit du jet quittant la boite de mélange, sillons qui perturbent plus ou moins gravement la planéité de la surface supérieure du lit granulaire situé immédiatement en aval du dispositif considéré.

Le dispositif selon la présente invention est donc apprécié au regard des deux critères: la qualité de l'écoulement d'une part, et la non formation de sillons à la surface supérieure du lit granulaire en aval d'autre part.

### EXAMEN DE L'ART ANTERIEUR

De nombreux dispositifs sont connus pour distribuer, mélanger ou collecter un fluide dans une enceinte contenant des particules solides, telle en particulier qu'une colonne multi étagée. Les dispositifs de distribution/mélange ont généralement comme fonctions de distribuer un fluide de manière la plus homogène possible sur la section de la colonne, de mélanger efficacement le fluide principal traversant les différents lits de la colonne avec un ou plusieurs fluides secondaires introduits au niveau de chaque lit, éventuellement de collecter un débit de fluide entre deux lits, et finalement d'homogénéiser au mieux les concentrations en sortie de lit avant l'entrée dans le lit de particules solides suivant, c'est à dire situé immédiatement en aval du dispositif considéré.

De plus, les dispositifs de distribution/mélange doivent répondre à un certain nombre de contraintes telles que générer le moins possible de dispersion axiale, générer le minimum de perte de charge, et ne pas produire de perturbations hydrodynamiques pouvant altérer les performances du procédé.

Les brevets EP0074815, US2006/0108274A1, FR2708480 fournissent des exemples de dispositifs de distribution/mélange utilisés dans le cas de l'adsorption en lit mobile simulé (LMS).

Les dispositifs de distribution/mélange présentent un certains nombres de caractéristiques courantes pour l'homme du métier. Pour la bonne clarté du texte on parle de plateau P et de plateau P+1 pour désigner le plateau situé immédiatement en aval, dans le sens de l'écoulement du fluide principal.
- Division du plateau P de la colonne en régions ou panneaux, pouvant avoir diverses formes les plus courantes étant la division en secteurs angulaires ou en panneaux méridiens , c'est à dire en panneau parallèles, sensiblement de même largeur.
- Dans chaque panneau du plateau P, collecte du fluide principal par un système dit baffle de collecte.
- Mélange du fluide principal quittant le lit granulaire avec le fluide secondaire éventuellement injecté dans le panneau considéré par l'intermédiaire d'un réseau de distribution, se terminant par une boite d'injection.
- Redistribution du mélange entre fluide principal collecté et fluide secondaire injecté sur la section du panneau du plateau suivant P+1 par l'intermédiaire d'un dispositif de distribution (grille, plaque perforé ou autre) appelé distributeur.

Le fluide sortant du distributeur entre ensuite dans le lit de particules solides du lit P+1.

Le lit de particules peut être bloqué par le distributeur, c'est à dire qu'il n'y a aucun espace vide entre le distributeur et le lit de particules P+1.

Au contraire, un espace vide peut exister entre le distributeur et le lit, comme indiqué dans le brevet US2006/0108274A1, fig. 3B par exemple.

Dans le cas où il existe un espace vide entre le distributeur et le lit, comme décrit dans le brevet US2006/0108274A1, le distributeur doit être conçu de manière à ne pas générer de vitesses de fluide trop importantes localement en entrée de lit, afin de ne pas provoquer de fluidisation partielle du lit de particules.

Un tel phénomène peut en effet avoir un effet négatif sur les performances du procédé.

Ce phénomène est bien décrit dans le brevet US2006/0108274A1. Ce brevet décrit une plaque brise-jet positionnée au dessus du distributeur, et sous les zones ouvertes correspondantes à la sortie d'un jet de liquide, afin de limiter les fortes vitesses de ce jet en entrée du lit granulaire aval. Mais ceci peut ne pas être suffisant pour éliminer le phénomène, d'où le recours nécessaire à d'autres solutions.

Pour réduire encore le phénomène, l'art antérieur propose plusieurs types de solutions :
- Positionner en aval de la grille de distribution un élément de type grille ou plaque perforée permettant de limiter la turbulence et les fortes vitesses en entrée de lit de particules
- Augmenter le nombre de panneaux et l'ouverture des baffles de collecte pour diminuer la vitesse de passage du fluide dans le dispositif de distribution/mélange.

Par ailleurs, il est bien connu de l'homme de métier que tout dispositif produisant suffisamment de perte de charge permet en principe d'homogénéiser les profils de vitesse en sortie dudit dispositif. De ce fait, le choix de la grille de distribution peut impacter le profil de vitesse du fluide entrant dans le lit de particules solides situé en aval. Le fait d'augmenter plus ou moins fortement la perte de charge au niveau du distributeur peut donc limiter le risque de perturbations hydrodynamiques en entrée de lit de particules. Cependant, cette solution n'est pas idéale car l'augmentation de la perte de charge sur la globalité de la surface des panneaux peut être indésirable pour des raisons de résistance mécanique, ou pour des raisons de détérioration de l'hydrodynamique dans le dispositif de distribution/mélange.

De plus, l'utilisation d'un distributeur à forte perte de charge peut être la source potentielle d'encrassement, voire de bouchages partiels du dispositif de distribution /mélange.

### DESCRIPTION SOMMAIRE DES FIGURES

La figure 1, selon l'invention, présente une colonne multi étagée avec 3 plateaux successifs, chaque plateau étant équipé d'un système de collecte et d'injection d'un fluide secondaire et du distributeur selon la présente invention.
La figure 2A, selon l'art antérieur, représente une vue de dessus d'un plateau divisé en secteurs dits panneaux méridiens.
La figure 2B, selon l'invention, montre une vue de dessus d'un panneau méridien et permet de visualiser l'étendue du brise jet, de la plaque intermédiaire et de la plaque de distribution.
La figure 3A, selon l'art antérieur, représente une vue de dessus d'un plateau divisé en secteurs radiaux.
La figure 3B, selon l'invention, montre une vue de dessus d'un secteur radial et permet de visualiser l'étendue du brise jet, de la plaque intermédiaire et de la plaque de distribution.

### DESCRIPTION SOMMAIRE DE L'INVENTION

Le problème que cherche à résoudre la présente invention est celui de l'amélioration de l'écoulement des fluides à l'intérieur d'une colonne comportant une multiplicité de plateaux portant chacun un lit de solide granulaire, dite colonne multiétagée.

L'amélioration de l'écoulement dans le contexte de la présente invention signifie d'une part que l'écoulement se rapproche au mieux d'un écoulement piston, (c'est à dire d'un écoulement dans lequel la dispersion axiale du fluide traversant les différents lits successifs de la colonne est la plus faible possible), et d'autre part que le phénomène de formation de sillons à la surface du lit granulaire aval est minimisé, voire supprimé.

La colonne constitue globalement un milieu granulaire, et le fluide principal circulant entre les différents plateaux est un liquide en écoulement descendant.

La présente invention consiste en un dispositif de distribution permettant d'alimenter un lit granulaire supporté par un plateau P, le lit granulaire amont supporté par le plateau P-1, possédant un système de collecte du fluide principal et de mélange de ce fluide principal avec un ou plusieurs fluide(s) secondaire(s) se terminant par un baffle dit, baffle de collecte, possédant au moins une ouverture de sortie qui génère un jet liquide de vitesse comprise entre 0,5 m/s et 4 m/s.

Le fluide principal s'écoule verticalement vers le bas.

De façon plus précise, la présente invention peut être définie comme un dispositif de distribution d'un fluide alimentant chaque lit granulaire d'une colonne multi étagée présentant une succession de plateaux, chaque plateau (P) soutenant un lit de solide granulaire (noté quelquefois (P) par simplification), et étant divisé en panneaux notés (Pa), chaque panneau (Pa) étant équipé d'un système de collecte du fluide quittant ledit panneau (Pa) consistant essentiellement en un baffle, dit baffle de collecte, possédant une ouverture de sortie, ledit dispositif de distribution comprenant les 3 éléments suivants disposés de haut en bas en suivant l'écoulement du fluide:
a) un brise jet plein situé sensiblement dans l'axe de l'ouverture de sortie du baffle de collecte du panneau (Pa),
b) une plaque intermédiaire perforée s'étendant latéralement au delà du brise jet, d'ouverture comprise entre 10% et 40%, et préférentiellement comprise entre 15% et 30%,
c) une plaque de distribution s'étendant sur l'ensemble du panneau (Pa), et de degré d'ouverture compris entre 5% et 20%, et préférentiellement comprise entre 7% et 15%.

Selon une variante préférée de l'invention, les trois éléments constitutifs du distributeur sont disposés selon le sens d'écoulement du fluide dans l'ordre:
a) le brise jet plein,
b) la plaque intermédiaire perforée,
c) la plaque de distribution

Les 3 éléments sont préférentiellement accolés au sens où ils sont juxtaposés les uns aux autres. Dans certains cas faisant toujours partie de l'invention, ils peuvent être disjoints les uns des autres, et dans ce cas, la distance qui les sépare est au plus de 10 mm, et préférentiellement au plus de 5 mm.

Le terme distance est définie comme la distance séparant les parties ou extrémités les plus proches des deux éléments considérés.

La division du plateau en panneaux est connue de l'art antérieur. Les deux types de division les plus courants sont la division en panneaux méridiens et la division en panneaux correspondant à des secteurs angulaires. Les panneaux méridiens correspondent à des divisions du plateau en éléments parallèles, orientés selon un diamètre dudit plateau, et ayant sensiblement la même largeur. Le dispositif selon la présente invention est compatible avec tout type de division du plateau en panneaux, plus particulièrement la division en panneaux méridiens et en secteurs angulaires.

Dans une variante de l'invention, le dispositif de distribution de fluide selon l'invention, possède une plaque de distribution qui est une grille de type "Johnson", les fentes de la grille "Johnson" étant sensiblement perpendiculaires à l'axe longitudinal (ou méridien) du panneau. Selon une autre variante de l'invention, la plaque de distribution est constituée d'une simple plaque perforée.

Dans une autre variante de l'invention, le dispositif de distribution de fluides possède une plaque intermédiaire qui est une grille de type "Johnson", les fentes de la grille " Johnson" étant sensiblement perpendiculaires à l'axe longitudinal du panneau.

Selon une autre variante de l'invention, la plaque intermédiaire est constituée d'une plaque perforée de trous ayant des diamètres compris entre 0,5 mm et 1,5 mm.

De manière générale, la plaque intermédiaire s'étend sur une largeur comprise entre la largeur du brise jet, et une valeur égale à la demi largeur du panneau considéré, à plus ou moins 5 cm près .

De manière préférée, la largeur de la plaque intermédiaire est comprise entre 10 et 30 cm.

De manière générale, le brise jet s'étend sur une largeur comprise entre 2 et 6 cm, et préférentiellement comprise entre 3 cm et 5 cm.

Selon une variante de l'invention, la distance comprise entre l'extrémité inférieure du baffle de collecte du panneau (Pa) et l'extrémité supérieure du brise jet du panneau (Pa) est comprise entre 4 mm et 30 mm, et préférentiellement comprise entre 7 mm et 25 mm.

L'invention peut également se définir comme un procédé de séparation en lit mobile simulé faisant appel au dispositif selon l'invention, dans lequel la charge à séparer est un mélange quelconque de composés aromatiques ayant de 7 à 9 atomes de carbone.

L'invention peut également se définir comme un procédé de séparation en lit mobile simulé faisant appel au dispositif selon l'invention, dans lequel la charge à séparer est un mélange de normales et d'iso paraffines.

L'invention peut également se définir comme un procédé de séparation en lit mobile simulé faisant appel au dispositif selon l'invention, dans lequel la charge à séparer est un mélange de normales et d'iso oléfines.

L'invention peut également se définir comme un procédé de séparation en lit mobile simulé faisant appel au dispositif selon l'invention, dans lequel le fluide principal traversant ledit dispositif a une masse volumique comprise entre 600 et 950 kg/m³ et une viscosité comprise entre 0,1 et 0,6 10⁻³ Pa.s.

### DESCRIPTION DETAILLEE DE L'INVENTION

L'invention peut se définir comme un dispositif de distribution d'un fluide en provenance d'un système de collecte amont appelé baffle de collecte, qui possède une ouverture de sortie du fluide et qui délivre ledit fluide sous la forme d'un jet de vitesse comprise entre 0,5 et 4 m/s. Le dispositif de distribution selon l'invention permet d'alimenter un lit granulaire situé en aval dudit dispositif de manière à réaliser un écoulement du fluide aussi proche que possible d'un écoulement piston, et à minimiser ou éviter la formation de sillons à la surface supérieure du lit granulaire aval.

Le dispositif selon l'invention comporte essentiellement 3 éléments:
a) un brise jet plein (9) situé sensiblement dans l'axe de l'ouverture de sortie du baffle de collecte du panneau Pa-1,
b) une plaque intermédiaire perforée (8) s'étendant latéralement au delà du brise jet, d'ouverture comprise entre 10% et 40%, et préférentiellement comprise entre 15% et 30%,
c) une plaque de distribution (7) s'étendant sur l'ensemble du panneau (Pa), et de degré d'ouverture compris entre 5% et 20%, et préférentiellement comprise entre 7% et 15%.

L'ouverture de sortie du baffle de collecte du panneau (Pa) s'étend généralement sur toute la longueur du panneau considéré.

L'expression "sensiblement dans l'axe" de l'ouverture de sortie du baffle de collecte dans l'alinéa a) signifie que le brise jet est situé au dessous de l'ouverture de sortie du baffle de collecte, centré selon l'axe médian de ladite ouverture du baffle de collecte, et s'étend également sur toute la longueur du panneau.

Le terme "latéralement" dans l'alinéa b) signifie que la plaque perforée intermédiaire (8) a une largeur plus important que celle du brise jet (9) dans le cas de panneau méridien, la largeur étant la dimension perpendiculaire à la dimension longitudinale du panneau méridien considéré.

Dans le cas de panneau ayant la forme de secteur angulaire, le terme "latéralement" signifie que la plaque perforée intermédiaire (8) a une largeur plus importante que celle du brise jet (9), la largeur correspondant ici à la dimension radiale du secteur considéré.

La suite de la description détaillée sera mieux comprise au moyen des figures annexées.

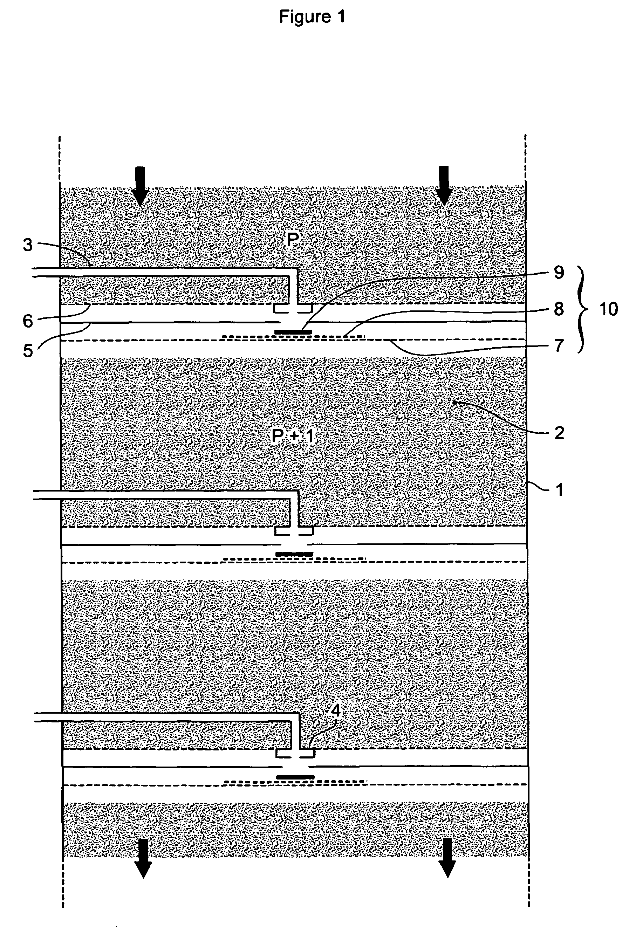

La figure 1 illustre un tronçon de colonne constitué de 2 lits de particules solides noté P pour le lit amont et P+1 pour le lit aval au sens de l'écoulement du fluide principal à l'intérieur de ladite colonne.

Seuls deux lits sont représentés, mais l'invention peut aussi s'appliquer à tous les plateaux constituants la colonne y compris au premier plateau situé en entrée de colonne.

La colonne est divisée en une pluralité de lits de particules solides (2), séparés par un dispositif permettant l'introduction d'un ou plusieurs fluides secondaires, appelé réseau d'alimentation (3) qui se termine par une boite d'injection-soutirage (4) permettant d'injecter ou de soutirer une quantité de fluide au niveau du lit granulaire (P).

Une grille supérieure (6) ou tout autre dispositif équivalent supporte le lit de particules (P). Un baffle de collecte (5) permet de récupérer le fluide principal s'écoulant au travers du lit granulaire du plateau (P).

L'ouverture du baffle de collecte (5) est généralement positionnée de manière à ce que le fluide principal en provenance du lit aval passe à proximité de (ou des) l'ouverture(s) de la boite d'injection (4).

Le fluide principal ainsi collecté est mélangé au fluide secondaire sortant de la boite (4).

Les fluides principal et secondaire ainsi mélangés sont redistribués sur la section de colonne en passant dans le distributeur (10), qui selon l'invention, est constitué de 3 éléments disposés en série selon l'écoulement du fluide principal:
a) une plaque brise-jet (9) situé approximativement dans l'axe du baffle de collecte (5),
b) une plaque intermédiaire (8) disposée sous le brise jet et s'étendant latéralement au delà dudit brise jet, d'ouverture comprise entre 10% et 40%, et préférentiellement comprise entre 15% et 30%,
c) une plaque de distribution (7) située sous la plaque intermédiaire (8), s'étendant sur l'ensemble du panneau (Pa), de degré d'ouverture compris entre 5% et 20%, et préférentiellement comprise entre 7% et 15%.

Un des avantages du dispositif selon l'invention réside en ce que sous les ouvertures du baffle de collecte (5) où de fortes vitesses du fluide peuvent exister, la plaque perforée intermédiaire (8) permet de diminuer fortement la vitesse du fluide passant à travers la plaque de distribution (7), tout en améliorant la distribution dudit fluide sur le lit granulaire aval P+1.

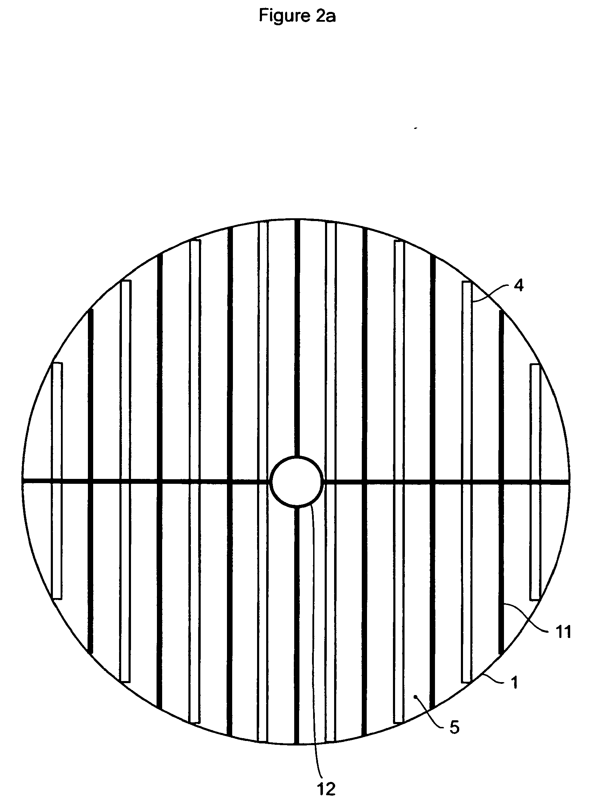

La figure 2A selon l'art antérieur, illustre une découpe du plateau support du lit granulaire (P) en panneaux méridiens parallèles. La colonne (1) est divisée en panneaux méridiens (11).

La colonne est ici équipée d'un mat central (12) servant éventuellement de point d'appui aux différents panneaux ou aux poutres éventuelles les supportant.

Sur la figure 2A sont reportées les boites d'injection-soutirage (4), et les baffles de collecte (5). Chaque panneau méridien (11) comporte donc une boite d'injection/soutirage (4) et un baffle de collecte (5). Il convient de noter que l'axe selon lequel sont alignés les panneaux du plateau P peut varier lorsqu'on passe au plateau P+1. L'invention est parfaitement compatible avec tout angle de décalage entre les panneaux du plateau P et ceux du plateau P+1.

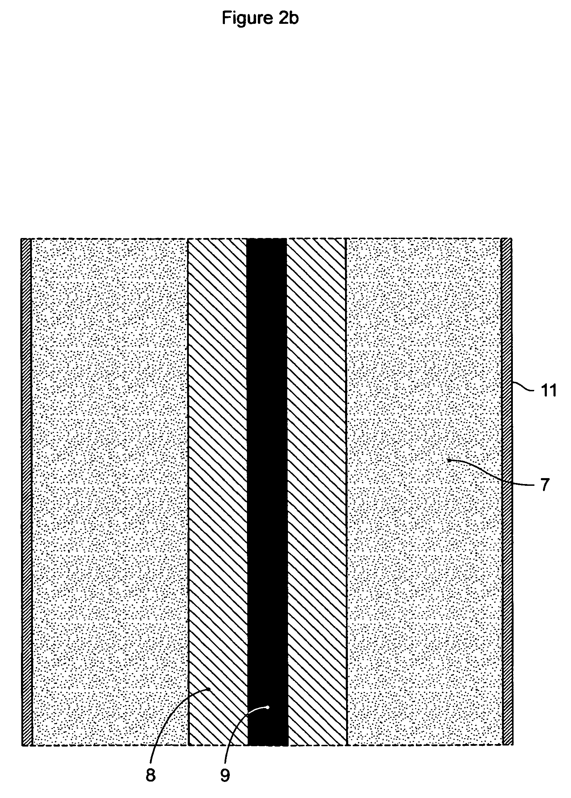

La figure 2B est une vue de dessus d'un distributeur selon l'invention appliqué à un panneau méridien. Le distributeur (10) est composé d'une grille de distribution (7) couvrant toute la surface du panneau, sur laquelle ont été juxtaposés une plaque perforée intermédiaire (8) et un brise jet (9). La vue de dessus permet de montrer que, selon l'invention, la plaque perforée intermédiaire (8) s'étend latéralement au delà du brise jet (9). Le terme "latéralement" dans le contexte de panneau méridien signifie que l'extension de la grille intermédiaire (8) par rapport au brise jet (9) se fait selon la direction perpendiculaire à la dimension longitudinale du panneau considéré.

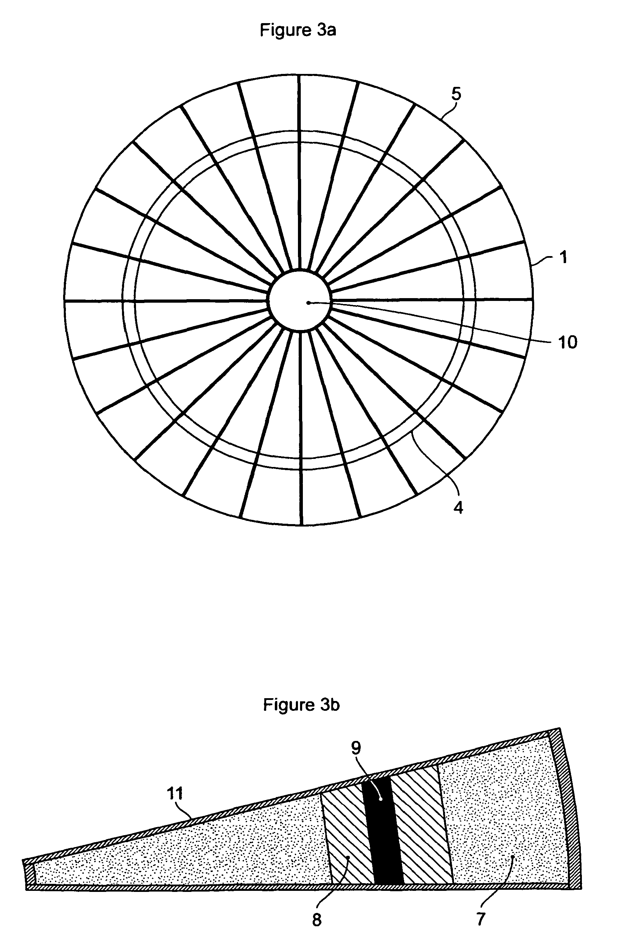

La figure 3A, selon l'art antérieur illustre une découpe du plateau en secteurs angulaires. la figure 3B est une vue de dessus d'un distributeur selon l'invention appliqué à un panneau en forme de secteur angulaire.

Dans ce cas, le distributeur (10) est composé d'une grille de distribution (7) couvrant toute la surface du secteur angulaire sur laquelle ont été juxtaposés une plaque perforée intermédiaire (8), et un brise jet (9). La vue de dessus permet de montrer que, selon l'invention, la plaque perforée intermédiaire (8) s'étend latéralement au delà du brise jet (9).

Le terme "latéralement" dans le contexte de panneau en secteur angulaire signifie que l'extension de la grille intermédiaire (8) par rapport au brise jet (9) se fait selon la direction radiale du panneau considéré.

### EXEMPLE

L'efficacité du dispositif selon l'invention a été testée sur des essais en maquette plexiglass. La maquette reproduit une portion de lit et un dispositif selon l'invention tel que représenté en figure 1.

Le plateau est divisé en panneaux méridiens.

La largeur du panneau méridien est de 1,2 m, la hauteur d'un lit est de 1,2 m.

La profondeur de la maquette est de 18 cm. Le baffle de collecte (5) situé au dessous du lit granulaire P est perforé selon des trous de 30 mm de diamètre et distants de 60 mm centre à centre.

La maquette est remplie d'un tamis de zéolithe de granulométrie centrée autour de 610 µm. La maquette est remplie jusqu'à une hauteur de 10 mm sous le distributeur selon l'invention. La maquette est alimentée en eau à la vitesse superficielle de 2cm/s.

Plusieurs configurations de distributeurs sont testées et reportées en table 1.

Les distributeurs testés sont composés des éléments suivants:
- a) brise-jet (9) de différentes largeurs
- b) plaques intermédiaires perforées (8) par des trous de 1mm de diamètre, suivant des degrés d'ouvertures et des largeurs différentes
- c) plaque de distribution (7) constituée d'une grille à ouvertures différentes, couvrant la totalité de la maquette.

Tous les éléments sont centrés sous l'ouverture du baffle de collecte (5).

En cas de perturbation du lit de particules, un sillon est généralement observé sensiblement au droit de l'ouverture du baffle de collecte (5). Ce sillon est le résultat d'une fluidisation locale des particules induite par la présence de fortes vitesses de jet en sortie du baffle de collecte. Les hauteurs des sillons (sillon max) formés sur la surface supérieure du lit granulaire situé en aval du dispositif ont été mesurées à chaque essai et constitue un premier paramètre d'appréciation de la performance des distributeurs.

Dans un deuxième temps, des mesures de distribution de temps de séjour (en abrégé DTS) ont été réalisées pour quantifier la dispersion axiale dans le lit alimenté par le distributeur étudié. Pour cela, la maquette est remplie de billes de verre de 1mm de diamètre, de manière analogue au remplissage en billes de zéolithe, les billes de verre se prêtant mieux à une mesure de DTS.

La méthode de DTS est expliquée dans de nombreux ouvrages, dont *"*Génie de la réaction Chimique" de D.Scweich, 2001, éditions Tec&Doc, Par*is.*

Les résultats sont représentés sous forme du nombre de Peclet qui exprime le rapport entre la convection du fluide et la dispersion axiale. Plus le nombre de Peclet est élevé, plus la dispersion axiale est faible.

La minimisation de la dispersion axiale est généralement bénéfique aux procédés mettant en oeuvre des lits fixes de particules solides, dont en particulier les procédés d'adsorption.

La dispersion axiale constitue le second paramètre d'appréciation de la performance des distributeurs.

### Tableau 1 : synthèse des essais réalisés

**Tableau 1**

| CAS | Largeur brise-jet | % grille | %Plaque perforée | Largeur plaque perforée | Sillon max | Peclet |
|---|---|---|---|---|---|---|
| cas 1 | 0 | 12.0% | - | - | 5cm | 280 |
| cas 2 | 4cm | 12.0% | 20% | 20cm | 0 | 370 |
| cas 3 | 4cm | 12.0% | 3% | 20cm | 2cm | 308 |
| cas 4 | 4cm | 12.0% | 10% | 20cm | 1cm | 310 |
| cas 5 | 4cm | 12.0% | 30% | 20cm | 0 | 350 |
| cas 6 | 4cm | 12.0% | 20% | 12c | 1cm | 322 |
| cas 7 | 4cm | 12.0% | 20% | 30cm | 0 | 368 |
| cas 8 | 4cm | 12.0% | 20% | 60cm | 0 | 340 |

Le cas 1 est selon l'art antérieur.

Le cas 1 ne possède pas de brise jet. Il sert de cas de référence, et l'on observe que sa performance est la moins bonne avec un nombre de Peclet de 280 et un sillon de profondeur 5cm.

Le meilleur résultat est obtenu avec un distributeur selon l'invention correspondant au cas 2, composé:
a) d'un brise-jet (9) de 4cm de largeur,
b) d'une plaque intermédiaire (8) perforée de trous de 1 mm, située au dessous du brise jet et centrée selon l'axe dudit brise jet, de 20cm de largeur, et de 20% d'ouverture
c) d'une grille de distribution (7) d'ouverture 12% s'étendant sur toute la section de panneau.

Ce distributeur permet de maximiser le nombre de Peclet (370) tout en éliminant la formation de sillons dans le lit granulaire aval.

Les cas 3, 4 et 5 selon l'invention montrent qu'il existe une optimisation sur le degré d'ouverture de la plaque perforée intermédiaire. Une ouverture de la plaque perforée intermédiaire de 3% (cas 3) et 10% (cas 4) produit des résultats inférieurs à celui d'une plaque intermédiaire avec une ouverture de 30% (cas 5).

De la même façon les cas 6, 7, 8 selon l'invention montrent qu'il existe une valeur optimale de la largeur de la plaque intermédiaire, cette valeur optimale se situant au voisinage de 20 cm.

## Revendications

1. Dispositif de distribution d'un fluide alimentant au moins un lit granulaire d'une colonne multi étagée présentant une succession de plateaux, chaque plateau (P) soutenant un lit de solide granulaire, et étant divisé en panneaux, notés (Pa), ledit dispositif étant appliqué à chaque panneau (Pa) du plateau (P) équipé d'un baffle de collecte (5) situé immédiatement en amont du dispositif, ledit dispositif comprenant les 3 éléments suivants disposés de haut en bas en suivant le sens d'écoulement du fluide, lesdits éléments étant coaxiaux et centrés dans l'axe d'ouverture du baffle (5):
a) un brise jet plein (9) situé approximativement dans l'axe de l'ouverture de sortie du baffle de collecte du panneau Pa, et centré selon l'axe dudit baffle de collecte,
b) une plaque perforée intermédiaire (8) s'étendant latéralement au delà du brise jet, sur une largeur comprise entre la largeur dudit brise jet, et une valeur égale à la demi largeur du panneau, à plus ou moins 5 cm près, et de degré d'ouverture compris entre 15% et 30%,
c) une plaque de distribution (7) s'étendant sur l'ensemble de la section du panneau (Pa), et de degré d'ouverture compris entre 7% et 15%.

2. Dispositif de distribution selon la revendication 1, dans lequel les 3 éléments brise jet plein (9), plaque perforée intermédiaire (8), plaque de distribution (7) sont accolés les uns aux autres.

3. Dispositif de distribution selon la revendication 1, dans lequel les 3 éléments brise jet plein (9), plaque perforée intermédiaire (8), plaque de distribution (7) sont disjoints les uns des autres, la distance séparant deux éléments successifs étant d'au plus 10 mm, et préférentiellement d'au plus 5 mm.

4. Dispositif de distribution selon l'une quelconque des revendications 1 à 3, dans lequel les panneaux (Pa) sont de type méridien, c'est à dire correspondent à des divisions du plateau selon des éléments parallèles, orientés selon un diamètre dudit plateau, et ayant sensiblement la même largeur.

5. Dispositif de distribution de fluides selon l'une quelconque des revendication 1 à 4, dans lequel la plaque de distribution (7) est une grille de type "Johnson", les fentes de la grille étant sensiblement perpendiculaires à l'axe longitudinal du panneau.

6. Dispositif de distribution de fluides selon l'une des revendications 1 à 5, dans lequel la plaque perforée intermédiaire (8) est une grille de type "Johnson", les fentes de ladite grille étant sensiblement perpendiculaires à l'axe longitudinal du panneau.

7. Dispositif de distribution de fluides selon l'une des revendications 1 à 6, dans lequel le brise jet plein (9) s'étend sur une largeur comprise entre 2 cm et 6 cm, et préférentiellement comprise entre 3 cm et 5 cm.

8. Dispositif de distribution de fluides selon l'une des revendications 1 à 7, dans lequel la distance comprise entre l'extrémité inférieure du baffle de collecte (5) et l'extrémité supérieure du brise jet (9) est comprise entre 4 mm et 30 m, et preférentiellement comprise entre 7 mm et 25 mm.

9. Procédé de séparation en lit mobile simulé faisant appel au dispositif selon l'une quelconque des revendications 1 à 8, dans lequel la charge à séparer est un mélange quelconque de composés aromatiques ayant de 7 à 9 atomes de carbone.

10. Procédé de séparation en lit mobile simulé faisant appel au dispositif selon l'une quelconque des revendications 1 à 8, dans lequel la charge à séparer est un mélange de normales et d'iso paraffines.

11. Procédé de séparation en lit mobile simulé faisant appel au dispositif selon l'une quelconque des revendications 1 à 8, dans lequel la charge à séparer est un mélange de normales et d'iso oléfines.

12. Procédé de séparation en lit mobile simulé faisant appel au dispositif selon l'une quelconque des revendications 1 à 8, dans lequel le fluide principal traversant ledit dispositif a une masse volumique comprise entre 600 et 950 kg/m³ et une viscosité comprise entre 0,1 et 0,6 cPo.

## Claims

1. A device for distributing a fluid supplying at least one granular bed of a multistage column having a succession of plates, each plate (P) supporting a bed of granular solid and being divided into panels denoted (Pa), said device being applied to each panel (Pa) of a plate (P) equipped with a collecting baffle (5) located immediately upstream of the device, said device comprising the following three elements disposed from top to bottom in the direction of fluid flow:
a) a solid jet breaker (9) located approximately in the axis of the outlet opening of the collecting baffle of the panel (Pa) and centred on the axis of said collecting baffle;
b) an intermediate perforated plate (8) extending laterally beyond the jet breaker over a width in the range from the width of said jet breaker to a value equal to half the width of the panel plus or minus 5 cm, and with a degree of opening in the range 15% to 30%;
c) a distribution plate (7) extending over the entire section of the panel (Pa), and with a degree of opening in the range 7% to 15%.

2. A distribution device according to claim 1, in which the three elements, the solid jet breaker (9), intermediate perforated plate (8) and distribution plate (7), adjoin one another.

3. A distribution device according to claim 1, in which the three elements, the solid jet breaker (9), intermediate perforated plate (8) and distribution plate (7), are separate from each other, the distance separating two successive elements being at most 10 mm, preferably at most 5 mm.

4. A distribution device according to any one of claims 1 to 3, in which the panels (Pa) arc of the meridional type, i.e. corresponding to divisions of the plate into parallel elements orientated along a diameter of said plate and having substantially the same width.

5. A fluid distribution device according to any one of claims 1 to 4, in which the distribution plate (7) is a "Johnson" type screen, the slots of the screen being substantially perpendicular two the longitudinal axis of the panel.

6. A fluid distribution device according to one of claims 1 to 5, in which the intermediate perforated plate (8) is a "Johnson" type screen, the slots of said screen being substantially perpendicular to the longitudinal axis of the panel.

7. A fluid distribution device according to one of claims 1 to 6, in which the solid jet breaker (9) extends over a length in the range 2 cm to 6 cm, preferably in the range 3 cm to 5 cm.

8. A fluid distribution device according to one of claims 1 to 7, in which the distance between the lower end of the collecting baffle (5) and the upper end of the jet breaker (9) is in the range 4 mm to 30 mm, preferably in the range 7 mm to 25 mm.

9. A process for simulated moving bed separation using a device according to any one of claims 1 to 8, in which the feed to be separated is any mixture of aromatic compounds containing 7 to 9 carbon atoms.

10. A process for simulated moving bed separation using a device according to any one of claims 1 to 8, in which the feed to be separated is a mixture of normal and isoparaffins.

11. A process for simulated moving bed separation using a device according to any one of claims 1 to 8, in which the feed to be separated is a mixture of normal and iso-olefins.

12. A process for simulated moving bed separation using a device according to any one of claims 1 to 8, in which the principal fluid passing through said device has a density in the range 600 to 950 kg/m³ and a viscosity in the range 0.1 to 0.6 cPo.

## Patentansprüche

1. Vorrichtung zur Verteilung eines Fluids, die mindestens ein Granulatbett einer mehrstufigen Säule speist, die eine Aufeinanderfolge von Platten aufweist, wobei jede Platte (P) ein festes Granulatbett trägt und in mit (Pa) bezeichnete Platten unterteilt ist, wobei die Vorrichtung an jeder Platte (Pa) der Platte (P) angewandt wird, die mit einer Sammelsperre (5) versehen ist, die sich unmittelbar stromaufwärts zur Vorrichtung befindet, wobei die Vorrichtung die 3 folgenden Elemente umfasst, die von oben nach unten in Fließrichtung des Fluids angeordnet sind, wobei die Elemente koaxial und in der Öffnungsachse der Sperre (5) zentriert sind:
a) einen Vollwasserstrahlregler (9), der sich annähernd in der Achse der Ausgangsöffnung der Sammelsperre der Platte (Pa) befindet und entlang der Achse der Sammelsperre zentriert ist,
b) eine perforierte Zwischenplatte (8), die sich seitlich über den Wasserstrahlregler hinaus auf einer Breite zwischen der Breite des Wasserstrahlreglers und einem Wert gleich der halben Breite der Platte auf mehr oder weniger 5 cm genau erstreckt, mit einem Öffnungsrad zwischen 15% und 30%,
c) eine Verteilungsplatte (7), die sich auf der Gesamtheit des Querschnitts der Platte (Pa) erstreckt, mit einem Öffnungsgrad zwischen 7% und 15%.

2. Verteilungsvorriehtung nach Anspruch 1, bei der die 3 Elemente Vollwasserstrahlregler (9), perforierte Zwischenplatte (8) und Verteilungsplatte (7) miteinander verbunden sind.

3. Verteilungsvorrichtung nach Anspruch 1, bei der die 3 Elemente Vollwasserstrahlregler (9), perforierte Zwischenplatte (8) und Verteilungsplatte (7) voneinander getrennt sind, wobei der Abstand zwischen zwei aufeinander folgenden Elementen höchstens 10 mm und vorzugsweise höchstens 5 mm beträgt.

4. Verteilungsvorrichtung nach einem der Ansprüche 1 bis 3, bei der die Platten (Pa) meridianen Typs sind, d.h. Unterteilungen der Platte nach parallelen, entlang eines Durchmessers der Platte ausgerichteten Elementen mit im Wesentlichen derselben Breite entsprechen.

5. Verteilungsvorrichtung für Fluide nach einem der Ansprüche 1 bis 4, bei der die Verteilungsplatte (7) ein Gitter des Typs "Johnson" ist, wobei die Schlitze des Gitters im Wesentlichen zur Längsachse der Platte senkrecht sind.

6. Verteilungsplatte für Fluide nach einem der Ansprüche 1 bis 5, bei der die perforierte Zwischenplatte (8) ein Gitter des Typs "Johnson" ist, wobei die Schlitze des Gitters im Wesentlichen auf die Längsachse der Platte senkrecht sind.

7. Verteilungsvorrichtung für Fluide nach einem der Ansprüche 1 bis 6, bei der sich der Vollwasserstrahlregler (9) auf einer Breite zwischen 2 cm und 6 cm und vorzugsweise zwischen 3 cm und 5 cm erstreckt.

8. Verteilungsvorrichtung für Fluide nach einem der Ansprüche 1 bis 7, bei der der Abstand zwischen dem unteren Ende der Sammelsperre (5) und dem oberen Ende des Wasserstrahlreglers (9) zwischen 4 mm und 30 mm und vorzugsweise zwischen 7 mm und 25 mm beträgt.

9. Trennverfahren im simulierten Flüssigbett, das die Vorrichtung nach einem der Ansprüche 1 bis 8 einsetzt, bei dem die zu trennende Ladung ein beliebiges Gemisch von aromatischen Verbindungen mit 7 bis 9 Kohlenstoffatomen ist.

10. Trennverfahren im simulierten Flüssigbett, das die Vorrichtung nach einem der Ansprüche 1 bis 8 einsetzt, bei dem die zu trennende Ladung ein Gemisch von Normalen und Isoparaffinen ist.

11. Trennverfahren im simulierten Flüssigbett, das die Vorrichtung nach einem der Ansprüche 1 bis 8 einsetzt, bei dem die zu trennende Ladung ein Gemisch aus Normalen und Isoolefinen ist.

12. Trennverfahren im simulierten Flüssigbett, das die Vorrichtung nach einem der Ansprüche 1 bis 8 einsetzt, bei dem das durch die Vorrichtung fließend Hauptfluid eine Volumen bezogene Masse zwischen 600 und 950 kg/m³ und eine Viskosität zwischen 0,1 und 0,6 cPo aufweist.
